# EUROPÄISCHE PATENTSCHRIFT

(11) **EP 0 599 894 B1**
(45) Veröffentlichungstag und Bekanntmachung des Hinweises auf die Patenterteilung: **17.01.1996**
(21) Anmeldenummer: 92916907.6
(22) Anmeldetag: 11.08.1992
(51) Int. Cl.: B29C 33/60

(54) **VERWENDUNG VON AMINOALKANOLAMIDESTERN ALS VERARBEITUNGSHILFSMITTEL FÜR THERMOPLASTISCHE KUNSTSTOFFE**
USE OF AMINOALKANOLAMIDE ESTERS AS AUXILIARIES IN THE PROCESSING OF THERMOPLASTICS
UTILISATION D'AMINOALCANOLAMIDE-ESTERS COMME AUXILIAIRES DE TRANSFORMATION POUR MATIERES THERMOPLASTIQUES

(30) Priorität: 20.08.1991 DE 4127471
(43) Veröffentlichungstag der Anmeldung: 08.06.1994
(73) Patentinhaber: Henkel Kommanditgesellschaft auf Aktien, D-40191 Düsseldorf (DE)
(72) Erfinder: KLAMANN, Jörg-Dieter, D-2850 Bremerhaven-Surheide (DE); KRAMPITZ, Dieter, D-4050 Mönchengladbach 1 (DE); LIPPMANN, Andreas, D-4044 Kaarst 2 (DE); PLOOG, Uwe, D-5657 Haan (DE)
(86) Internationale Anmeldenummer: EP9201832
(87) Internationale Veröffentlichungsnummer: WO9303903

(56) Entgegenhaltungen:
- FR-A- 2 527 214
- GB-A- 1 172 171
- US-A- 4 180 492
- JOURNAL OF PHYSICS D. APPLIED PHYSICS Bd. 19, Nr. 5, Mai 1986, BRISTOL GB Seiten 841-856 B.J. BRISCOE AND S.S. PANESAR 'ALIPHATIC ESTERS AS MOULD RELEASE AGENTS FOR POLYURETHANES; THE ROLE OF INTERFACE MORPHOLOGY' siehe Seite 843;
- PATENT ABSTRACTS OF JAPAN vol. 14, no. 310 (C-736)(4253) 4. Juli 1990
- PATENT ABSTRACTS OF JAPAN vol. 14, no. 370 (C-747)(4313) 10. August 1990
- R. Gächter und H. Müller, Taschenbuch der Kunststoff- Additive, 3. Ausgabe (1990), S. 478-483 und 494-497.

## Beschreibung

Gegenstand der vorliegenden Erfindung ist die Verwendung von Aminoalkanolamidestern von Carbonsäuren als Verarbeitungshilfsmittel für thermoplastische Kunststoffe. Bei der Verarbeitung von thermoplastischen Kunststoffen sind Verarbeitungshilfsmittel notwendig, um den Aufschmelzvorgang und die Bildung einer homogenen fließfähigen Masse zu fördern und durch Erniedrigung der inneren Reibung den Fluß der Schmelze zu erleichtern. Dies kann durch Zusatz von Gleitmitteln erreicht werden, die dem Kunststoff vor der formgebenden Verarbeitung zugegeben werden. Zum anderen gilt es in der Kunststoffverarbeitung das Kleben der Kunststoffschmelze an heißen Oberflächen der Maschinenteile oder an den Wänden der Formwerkzeuge zu mindern. Hierzu dienen Formtrennmittel, die nach ihrer Einarbeitung in den Kunststoff aufgrund ihrer nur begrenzten Verträglichkeit aus dem Kunststoff an die Oberfläche auswandern und somit das Kleben herabsetzen. Hier und im folgenden wird der Begriff "Formtrennmittel" synonym für den besonders auf dem PVC-Gebiet gebräuchlichen Begriff "äußere Gleitmittel" verwendet. Prinzipiell hat die Verwendung der Verarbeitungshilfsmittel auch erheblichen Einfluß auf die Morphologie, Homogenität und Oberflächenbeschaffenheit der Kunststofferzeugnisse.

Ob ein Additiv als Gleitmittel oder Formtrennmittel wirkt, hängt von vielen Faktoren ab, wie von dessen Struktur und von der Art des Kunststoffes, wobei Gleitwirkung und Formtrennwirkung in vielen Fällen nebeneinander bestehen können. In der Regel werden für unpolarere Kunststoffe wie Polyethylene und Polypropylene als Gleitmittel Metallseifen, Fettsäureester und Fettsäureamide verwendet. Polarere Kunststoffe wie Polyester, Polycarbonate, Polyamide, PVC, Polystyrol und ABS brauchen meist sowohl Gleitmittel als auch Formtrennmittel. Geeignete Formtrennmittel sind Fettsäureamide, Metallseifen, Polyethylenwachse, Fettsäureester oder auch das meist extern aufgetragene Silikonöl. Geeignete innere Gleitmittel für polare Kunststoffe unterteilt nach chemischen Klassen sind in Ullmanns Encyklopädie der technischen Chemie, 4. neubearbeitete und erweiterte Auflage, Band 15, Verlag Chemie, Weinheim, 1978, Seiten 568-569 aufgeführt sowie in Gächter/Müller, Kunststoffadditive, 3. Aufl., C. Hanser Verlag, 1990, S. 443 - 505.

Insbesondere die bisher üblichen Formtrennmittel, die hauptsächlich bei der Verarbeitung von thermoplastischen Kunststoffen nach dem Spritzgußverfahren von Bedeutung sind, haben jedoch einen Nachteil. Bei dem Spritzgußverfahren werden heiße Kunststoffschmelzen in eine Metallform gedrückt, in der sie so lange abkühlen, bis sie mit wenig Druckaufwand ausgeworfen werden können. Bei den bisher gebräuchlichen Formtrennmitteln mußte eine lange Abkühlphase in Kauf genommen werden. So entfalteten die Formtrennmittel erst bei niedrigen Entformungstemperaturen ihre Trennwirkung voll. Aus ökonomischer Sicht werden daher Formtrennmittel gewünscht, die bereits bei hohen Temperaturen Trennwirkung haben und den Auswurf von Formteilen mit geringem Auswerferdruck ermöglichen. Auch die aus dem Stand der Technik bekannten Gleitmittel sind in ihrer Bildung einer homogenen, fließfähigen Masse zu verbessern, damit auch komplizierte Strukturen aus thermoplastischen Kunststoffen, vor allem aus Polyamiden, Polyolefinen sowie Polystyrol und Copolymeren (z. B. ABS, ASA) hergestellt werden können. Zudem sollte das Verarbeitungshilfsmittel unter keinen Umständen während der Kunststoffverarbeitung die Farbe oder das Formverhalten des Kunststoffes beeinträchtigen sowie schwer flüchtig und thermostabil sein.

Aufgabe der vorliegenden Erfindung war es, Verarbeitungshilfsmittel bereitzustellen, die diese Anforderungen erfüllen.

Überraschenderweise können die Anforderungen an die Verarbeitungshilfsmittel durch Aminoalkanolamidester erfüllt werden. Dementsprechend ist Gegenstand der vorliegenden Erfindung die Verwendung von einem oder mehreren Aminoalkanolamidester(n) der allgemeinen Formel (I) 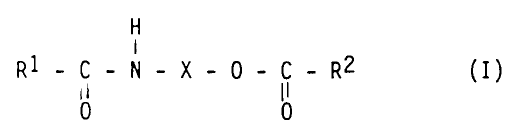
in der
- R¹, R²: gleich oder verschieden sein können und einen aliphatischen, gesättigten Alkylrest mit 1 bis 49 C-Atomen, wobei R¹ und R² zusammen mindestens 14 C-Atome haben, einen einfach oder mehrfach ungesättigten Alkylenrest mit 5 bis 21 C-Atomen, einen Phenylrest oder einen alkylierten Phenylrest mit 1 bis 22 C-Atomen in der Alkylgruppe bedeuten und
- X: einen aliphatischen, gesättigten zweiwertigen Alkylrest mit 2 bis 50 C-Atomen bedeutet
als Verarbeitungshilfsmittel für thermoplastische Kunststoffe, ausgewählt aus Polyamiden, Polyestern, Polycarbonaten, Polystyrolen und Copolymeren von Styrol, Polyethylenen, Polypropylenen oder Mischungen hiervon.

Aminoalkanolamidester sind an sich bekannte Verbindungen, die bereits in verschiedenen Anwendungsfeldern benutzt werden. So ist aus der britischen Patentschrift GB-A-1172171 bekannt, Aminoalkanolamidester der Stearinsäure, das heißt 2-Stearylamidoethylstearat, als Bestandteil einer externen Antihaftbeschichtung von Cellulosefilmen zu verwenden. Aus der japanischen Offenlegungsschrift JP-A-49085391 vom 15. August 1974 ist bekannt, daß Aminoalkanolamidester von Fettsäuren, wie 2-Laurylamidoethylstearat, als externe Gleitmittel für Polyamidtextilfasern verwendet werden. In diesem Anwendungsbereich der Textilfasern werden die Gleitmittel jedoch nicht bereits in den Kunststoff eingearbeitet, sondern nach Herstellung der Filamente werden diese durch ein wäßriges Bad gezogen, das Gleitmittel enthält. Demnach wird das Gleitmittel in der Textilindustrie von Anfang an direkt auf die Filamentoberfläche aufgebracht. Einen Hinweis darauf, daß die Aminoalkanolamidester in Kunststoffe homogen eingearbeitet werden können und gegebenenfalls aus dem Kunststoff an dessen Oberfläche migrieren, ist nicht zu finden.

Die erfindungsgemäß verwendeten Aminoalkoholesteramide sind nach dem an sich bekannten Verfahren der Veresterung von Aminoalkoholen mit Monocarbonsäuren und/oder Carbonsäurederivaten, ausgewählt aus der Gruppe Carbonsäureanhydride, Carbonsäurechloride und/oder Carbonsäureester von kurzkettigen Alkoholen mit 1 bis 4 C-Atomen, zugänglich. Von H. Brintzinger und H. Koddebusch wird die Herstellung von Ethanolamidestern aus Carbonsäurechloriden mit Mono- oder Diethanolamin in Gegenwart von Pyridin beschrieben, wobei die Veresterung praktisch vollständig abläuft (siehe Chemische Berichte 82 (1949), 201-203). Aus der bereits zitierten japanischen Offenlegungsschrift ist eine weitere Verfahrensvariante bekannt, in der zunächst Methylester der Carbonsäuren mit Ethanolamin und das erhaltene Amid anschließend mit weiterer freier Carbonsäure in Gegenwart von p-Toluolsulfonsäure umgesetzt wird. Prinzipiell kann jedoch die Veresterung unter üblichen Veresterungsbedingungen, beispielsweise gemäß der in Ullmanns Encyklopädie der technischen Chemie, Band 11, 4. neubearbeitete Auflage, Verlag Chemie, Weinheim, 1976, Seiten 91-93, durchgeführt werden. In der Regel werden dabei die Reaktionspartner in Gegenwart von Veresterungskatalysatoren wie Zinnverbindungen oder Zinnschliff bei Temperaturen von 160 bis 260 °C unter Wasserabspaltung miteinander umgesetzt. Falls gewünscht kann das Wasser azeotrop abdestilliert werden, wozu der Zusatz eines organischen Lösungsmittels notwendig ist, welches mit Wasser ein Azeotrop bildet. Bevorzugt im Sinne der Erfindung werden Aminoalkanolamidester verwendet, die durch vollständige bzw. praktisch nahezu vollständige Veresterung hergestellt worden sind. Unter einer praktisch nahezu vollständigen Veresterung wird verstanden, daß die erhaltenen Aminoalkanolamidester im statistischen Mittel keine freie Hydroxyl- oder Carboxylgruppe tragen, bevorzugt mit einer Säurezahl unter 10, einer Aminzahl unter 10 und einer Hydroxylzahl unter 10.

Die im Rahmen der Erfindung verwendeten Aminoalkanolamidester leiten sich ab von Aminoalkanolen der allgemeinen Formel II

H₂N - X - OH (II)

in der X die bereits beschriebene Bedeutung hat, und von Monocarbonsäuren der Formel R¹COOH und/oder R²COOH mit der bereits gegebenen Bedeutung für R¹ und R². Als Monocarbonsäuren mit aliphatischen gesättigten Alkylresten mit 1 bis 49 C-Atomen eignen sich Ameisensäure, Essigsäure, Propionsäure, Buttersäure, Capronsäure, Caprylsäure, Pelargonsäure, Caprinsäure, Laurinsäure, Myristinsäure, Palmitinsäure, Stearinsäure, Arachinsäure, Behensäure, Lignocerinsäure, Cerotinsäure und Melissinsäure sowie Gemische dieser Säuren wie sie aus natürlichen Fetten und Ölen gewonnen werden können. Als Monocarbonsäuren eignen sich auch Montansäure und Carbonsäuren, die durch Oxidation von hochmolekularen Alkoholen wie UNILIN^{R} Alkoholen der Petrolite Specialty Polymers Group, erhältlich sind, als auch in 2-Stellung verzweigte Carbonsäuren der allgemeinen Formel (III) 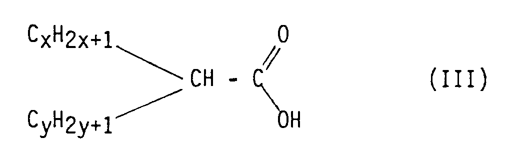
in der x und y gleich oder verschieden sind und eine ganze Zahl zwischen 4 und 22 bedeuten unter der Bedingung, daß x + y eine ganze Zahl im Bereich von 10 bis 42 ist. In 2-Stellung stark verzweigte Carbonsäuren der allgemeinen Formel (III) sind auf verschiedenem Wege zugänglich. So können durch Einführung von Kohlenmonoxid in organische Moleküle, die in 2-Stellung verzweigt sind, wie in 2-Stellung verzweigte Alkanole oder Alkylhalogenide, in Gegenwart von Wasser und sauren Katalysatoren (Koch-Haaf-Synthese) entsprechende Carbonsäuren hergestellt werden. Auch die Addition von Kohlenmonoxid an Alkene der Formel R-CH=CHR in Gegenwart von Wasser und Nickel-, Kobalt-, Rhodium-, Ruthenium,- Palladium- und Platin-Verbindungen führt zu entsprechenden in 2-Stellung verzweigten Carbonsäuren. Übersichten über die aus der organischen Chemie bekannten Herstellweisen dieser 2-Carbonsäuren sind in Methoden der organischen Chemie, Houben-Weyl, Band E 5, Erw. + Folgebände zur 4. Auflage, 1985, Seiten 302-362 zu finden. Zu solchen in α-Stellung zur Carboxylgruppe verzweigten Carbonsäuren kann man ferner durch Oxidation verzweigtkettiger Alkohole aus der Erdölchemie gelangen, beispielsweise durch Oxidation eines Isomerengemisches verzweigtkettiger C₁₆-Alkohole. Derartige verzweigte C₁₆-Alkohole können ihrerseits durch Aldolkondensation von Isooctylaldehyd, der seinerseits aus Isoheptan, das bei der Erdölcrackung anfällt, hergestellt werden. Einen weiteren Zugang bietet die Oxidation der nach dem Guerbetverfahren erhaltenen α-verzweigten primären Alkohole. Nach dem Guerbetverfahren werden gesättigte primäre Alkohole durch Kochen in Anwesenheit katalytischer Mengen Alkalihydroxid und Schwermetallsalzen zu definierten α-verzweigten primären Alkoholen dimerisiert (vgl. E.F. Pratt, D. G. Kubler, J. Am. Chem. Soc. 76, (1954), Seiten 52-56). So kann beispielsweise nach dem Guerbetverfahren aus n-Octanol 2-Hexyldecanol hergestellt werden, welches durch Oxidation in die Isopalmitinsäure überführt werden kann. Beispiele für diese Carbonsäuren sind 2-n-Butyl-n-octansäure, 2-n-Heptyl-n-undecansäure, 2-n-Octyl-n-dodecansäure, 2-n-Dodecyl-n-hexadecansäure und 2-n-Hexandecyl-n-eicosansäure. Ganz besonders bevorzugt wird Isopalmitinsäure (2-n-Hexyl-n-decansäure), die durch Oxidation von 2-Hexyldecanol hergestellt wird. Als Monocarbonsäuren mit einfach oder mehrfach ungesättigten Alkylenresten mit 5 bis 21 C-Atomen eignen sich Lauroleinsäure, Myristoleinsäure, Palmitoleinsäure, Petroselaidinsäure, Ölsäure, Elaidinsäure, Erucasäure, Linolsäure, Linolensäure und Brassidinsäure sowie jeren Gemische und insbesondere solche, wie sie aus natürlichen Fetten und Ölen gewonnen werden können. Bei den Monocarbonsäuren, die einen Phenylrest tragen, sind neben Benzoesäure deren Alkylderivate mit 1 bis 22 C-Atomen im Alkylrest hervorzuheben. Prinzipiell ist bei der Wahl der Monocarbonsäuren zu beachten, daß die Reste R¹ und R² zusammen mindestens 14 C-Atome haben, sofern diese Reste aliphatische, gesättigte Alkylreste bedeuten.

Bevorzugt werden Aminoalkanolamidester der allgemeinen Formel (I) verwendet, in der R¹ und R² einen aliphatischen gesättigten Alkylrest mit mindestens 5 C-Atomen, vorzugsweise mit 11 bis 23 C-Atomen, bedeuten, wobei R¹ und R² zusammen mindestens 14, vorzugsweise 16 C-Atome haben, oder einen einfach ungesättigten Alkylrest mit 5 bis 21 C-Atomen bedeuten. Demnach leiten sich die bevorzugt verwendeten Aminoalkanolamidester von höheren Carbonsäuren ab, wie von Laurinsäure, Palmitinsäure, Stearinsäure, Laurolein-, Palmitolein-, Ölsäure und Behensäure sowie von Gemischen dieser Säuren. Insbesondere bevorzugt werden Aminoalkanolamidester der allgemeinen Formel (I) in der R¹ und R² gleich sind und einen aliphatischen gesättigten unverzweigten Alkylrest mit 11 bis 23 C-Atomen bedeuten.

Die erfindungsgemäßen verwendeten Aminoalkanolamidester leiten sich, wie bereits dargelegt, von Aminoalkanolen der allgemeinen Formel (II) ab, wobei X für geradkettige oder verzweigte zweiwertige Alkylgruppen stehen kann. Bevorzugt steht X für eine unverzweigte Alkylgruppe mit 2 bis 8 C-Atomen. Geeignete Aminoalkanole sind Aminoethanol, Aminopropanole, Aminobutanole, Aminohexanole, Aminoheptanole, Aminooctanole sowie deren Isomere wie 2-Amino-1-butanol, 2-Amino-2-methyl-1-propanol und/oder 4-Amino-4-methyl-1-hexanol. Insbesondere bevorzugt sind Ethanolamin, 2-Amino-1-n-propanol, 3-Amino-1-n-propanol, 2-Amino-1-n-butanol, 3-Amino-1-n-butanol und/oder 4-Amino-1-n-butanol und ganz besonders Ethanolamin der Formel H₂NCH₂CH₂OH.

Im Rahmen der Erfindung werden ganz besonders bevorzugt Aminoalkanoamidester der allgemeinen Formel I verwendet, in der R¹ und R² einen aliphatischen, gesättigten, unverzweigten Alkylrest mit 11 bis 23 C-Atomen und X einen zweiwertigen unverzweigten Alkylrest mit 2 bis 4 C-Atomen bedeuten. Beispiele für diese Gruppe sind 2-Stearylamidoethylstearat, 2-Laurylamidoethylstearat, 2-Laurylamidoethyllaurat, 2-Stearylamidopropylstearat, 2-Behenylamidoethylstearat und 2-Stearylamidoethylbehenat.

Die praktische Anwendung der Aminoalkanolamidester erfolgt in der Weise, daß sie den zu verarbeitenden thermoplastischen Kunststoffen in Mengen von 0,01 bis 10, vorzugsweise 0,05 bis 5 und insbesondere 0,1 bis 3 Gewichtsteile zu 100 Gewichtsteilen thermoplastischen Kunststoffes beigegeben werden. Zweckmäßigerweise werden die Aminoalkanolamidester der bei der Herstellung des thermoplastischen Kunststoffes anfallenden Schmelze zugesetzt oder auf das Kunststoffgranulat bzw. -pulver bei erhöhten Temperaturen aufgebracht. Für eine homogene Vermischung empfiehlt es sich, den Aminoalkanolamidester mit dem thermoplastischen Kunststoff zusammen bei Temperaturen zwischen 140 °C bis 300 °C, das heißt in der Kunststoffschmelze, zu extrudieren und den mit Aminoalkanolamidestern vermischten Kunststoff anschließend zu granulieren. Gegebenenfalls werden die Granulate bei erhöhten Temperaturen getrocknet, um das Restwasser zu entfernen.

Die Aminoalkanolamidester können allen reinen sowie modifizierten thermoplastischen Kunststoffen und deren Mischungen zugesetzt werden, die ausgewählt sind aus Polyamiden, Polyestern, Polycarbonaten, Polystyrolen und Copolymeren von Styrol, Polypropylen und Polyethylen sowie deren Mischungen. Selbstverständlich können die thermoplastischen Kunststoffe modifiziert sein, wie das mit Kautschuk modifizierte schlagzähe Polypropylen, mit Füllstoffen gefüllt, stabilisiert oder pigmentiert sein. Bevorzugt im Sinne der Erfindung werden die Aminoalkanolamidester als Formtrennmittel und/oder Gleitmittel für thermoplastische Kunststoffe verwendet, vorzugsweise für solche, die mittels Extrusion, Pressen, Walzen, Kalandieren, Hohlkörperblasen, Schäumen und Spritzgießen, vorzugsweise durch Spritzgießen, formgebend verarbeitet werden. Die Aminoalkanolamidester zeigen als Formtrennmittel besonders gute Effekte bei polaren Kunststoffen wie Polyamid, Polyester, Polycarbonat, Polystyrol und Copolymere von Styrol und deren Mischungen. Durch Verwendung der Aminoalkanolamidester bei diesen Kunststoffen ist die Trennwirkung ausgezeichnet und vor allem schon bei hohen Temperaturen vorhanden. Zusätzlich wirken die Aminoalkanolamidester auch als Gleitmittel, wodurch ein gleichmäßiger schneller Fluß der Schmelze des Kunststoffes erreicht wird. Besonders gut wirken die Aminoalkanolamidester als Gleitmittel in Polyamid, Polypropylen und Polyethylen, wodurch es möglich ist, auch komplizierte Spritzgußteile herzustellen.

Letztendlich sind die Aminoalkanolamidester mit anderen Gleitmitteln, Stabilisatoren, Pigmenten und Füllstoffen verträglich, so daß die Aminoalkanolamidester mit bekannten üblichen Additiven den thermoplastischen Kunststoffen zugesetzt werden können.

Ein weiterer Gegenstand der vorliegenden Erfindung sind Formteile aus thermoplastischen Kunststoffen, ausgewählt aus Polyamiden, Polyestern, Polycarbonaten, Polystyrolen und Copolymeren von Styrol, Polyethylenen, Polypropylenen oder Mischungen hiervon, die Aminoalkanolamidester der allgemeinen Formel (I) enthalten. Angaben zu Einsatzmengen, geeigneten Aminoalkanoamidestern und Kunststoffen sind dem Vorstehenden zu entnehmen.

### Beispiele

### I Herstellung der Aminoalkanolamidester

### Beispiel 1: 2-Stearylamidoethylstearat

In einem Dreihalskolben mit Wasserabscheider wurden unter Stickstoff-Atmosphäre 858,7 g (3 Mol) technische Stearinsäure (92 Gew.-% C₁₈, 3 Gew.-% C₁₆, 1 Gew.-% C₁₇, 2 Gew.-% C₂₀, 2 Gew.-% Ölsäure) mit der Säurezahl (DIN 53402) 196 mit 91,7 g (1,5 Mol) 2-Amino-1-ethanol in Gegenwart von 100 ml Xylol unter Rühren auf Temperaturen zwischen 155 bis 185 °C erwärmt. Nach etwa 3 Stunden 45 Minuten war die Wasserabspaltung beendet. Die erhaltene Reaktionsmischung mit den Kennzahlen Säurezahl 1,8 und Aminzahl (DGF-C-V2; Bromphenolblau) Null wurde zur Vervollständigung der Veresterung mit weiteren 8,6 g (0,14 Mol) 2-Amino-1-ethanol versetzt. Bei 180 °C wurde die Reaktion 2 Stunden unter Wasserentfernung weitergeführt und anschließend Xylol im Vakuum abdestilliert. Man erhielt ein gelbliches, hartes Produkt mit einem Schmelzpunkt von 94 °C, einer Säurezahl von 1,8 und einer Aminzahl von 0,7.

### Beispiel 2: 2-Dodecylamidoethyldodecanat

Analog Beispiel 1 wurden 800,8 g (4 Mol) technische Laurinsäure (99 Gew.-% C₁₂, 0,5 Gew.-% C₁₀, 0,5 Gew.-% C₁₄) mit 122,2 g (2 Mol) 2-Amino-1-ethanol in Gegenwart von Xylol umgesetzt und anschließend mit 10 g (0,16 Mol) 2-Amino-1-ethanol nachverestert.

Man erhielt ein gelbliches, hartes Produkt mit einem Schmelzpunkt von 75 °C, einer Säurezahl von 1,8 und einer Aminzahl von 1,5.

### Beispiel 3:

Analog Beispiel 1 wurden 961,7 g (3 Mol) technische Behensäure (2,7 - 3,5 Gew.-% C₁₆, 17,3 - 18,5 Gew.-% C₁₈, 28,6 - 30 Gew.-% C₂₀, 45 - 47 Gew.-% C₂₂, 2,4 - 3,5 Gew.-% C₂₄ mit einer Säurezahl von 175 mit 91,7 g (1,5 Mol) 2-Amino-1-ethanol in Gegenwart von Xylol umgesetzt und anschließend mit 28,4 g (0,47 Mol) 2-Amino-1-ethanol nachverestert.

Man erhielt ein gelblich hartes Produkt mit einem Schmelzpunkt von 80 °C, einer Säurezahl von 3,8 und Aminzahl von 0,6.

### II Anwendungsbeispiele

### Einarbeitung der Additive in den Kunststoff

Aminoalkanolamidester mit Schmelzpunkten unter 80 °C wurden im Henschel-Fluidmischer bei ca. 80 °C/1000 min auf das Kunststoffgranulat aufgebracht. Aminoalkanolamidester mit Schmelzpunkten über 80 °C wurden durch Schütteln im Polyethylen-Beutel verteilt. Die homogene Einarbeitung der Aminoalkanolamidester in den Kunststoff erfolgte im Collin-Doppelschneckenextruder (Typ 235, 50x15 D) bei Temperaturen von 190 bis 265 °C. Die homogene Masse wurde im integrierten Wasserbad gekühlt und mittels Rundstranggranulator granuliert. Anschließend wurden die Granulate getrocknet. In Tabelle 1 sind die Extrusions- und Trocknungsbedingungen der Kunststoffe mit den eingearbeiteten Aminoalkanolamidestern aufgeführt. Die Mengen sind Gewichtsteile, die 100 Gewichtsteilen thermoplastischen Kunststoffs zugesetzt worden sind. Bei den Kunststoffen handelt es sich im einzelnen um:
- PBT/PC =: unverstärktes, hochschlagzähes Blend auf Basis von Polybutylenterephthalat/Polycarbonat mit einer Vicat-Erweichungstemperatur von 117 °C (DIN 53460) und einem melt-volume-index von 5 cm³/10 min bei 260 °C/2,16 kg erhältlich als Pocan^{R} S7913 der Bayer AG
- PA =: Polyamid 66, unverstärkte Extrusionstype (Monofile), niedrige Schmelzviskosität; Melt-volume-index von 150 cm³/10 min bei 275 °C/5 kg; erhältlich als Ultramid^{R} A 3 natur der BASF AG
- PBT =: Polybutylenterephthalat, unmodifiziert, mit einem melt-flow-index von 34 g/10 min bei 250 °C/21,2 kg; Vicat-Erweichungstemperatur (DIN 53460) 180 °C; erhältlich als Vestodur^{R} 1000 der Hüls AG
- PP =: Polypropylen, grundstabilisiert, gleitmittelfrei mit einem melt-flow-index von 5 g/10 min bei 230 °C/2,16 kg und einer Vicat-Erweichungstemperatur von 148 °C; erhältlich als Hostalen^{R} PPT 1070 der Hoechst AG
- PP* =: mit Kautschuk modifiziertes Polypropylen, UV-stabilisiert, schwarz eingefärbt, mit einem melt-flow-index von 4 g/10 min bei 230 °C/2,16 kg
- PE =: Polyethylen mit einer Dichte von 0,923 g/cm³ (DIN 53479) und einem melt-flow-index von 2 bis 3 g/10 min (DIN 53735) bei 190 °C/2,16 kg; Kristallitschmelzpunkt 115 °C (DTA); erhältlich als Flamulit^{R} PEJ 06 natur der Herberts GmbH

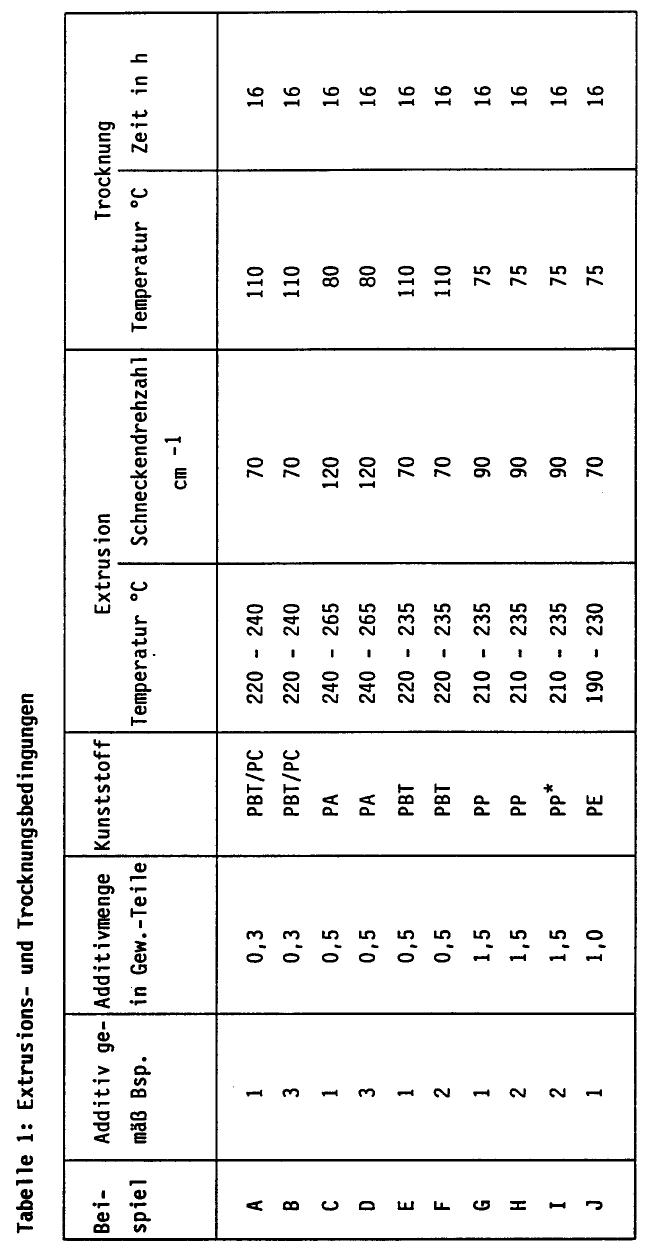

### Trennmittelprüfung an PBT/PC (Beispiel A und B)

Die Ermittlung der Trennmitteleigenschaften erfolgte mit der Mannesmann-Demag-Spritzgießmaschine, Modell D-60 NC II, und einem speziellen Entformungswerkzeug (Entformungshülse). Der sich beim Entformen der gespritzten Hülse im Auswerfersystem aufbauende Öldruck wurde als Maß für die Trennwirkung der Aminoalkanolamidester ausgewertet (Registrierung von Auswerferdruck, Kerntemperatur bei Entformung und Dosierzeit). Gespritzt wurde eine Entformungshülse mit dem Maßen: Entformungshülse 35 x 35 x 3,5 (oben) / 2,0 (unten) Höhe x Innendurchmesser x Wandstärke, Stangenanguß

### Spritzgießparamter

| | |
|---|---|
| Zylinderausrüstung: | offene Düse, Schneckendurchmesser = 28 mm, mit Rückströmsperre |
| Zylindertemperaturen: | 225, 235, 245 °C |
| Düsentemperatur: | 255 °C |
| Schneckendrehzahl: | 40 (Stellung) (220 min⁻¹) |
| Einspritzdruck: | 15 (ca. 280 bar) |
| Nachdruck: | 0 |
| Schneckenstaudruck: | 15 |
| Auswerferdruck: | 60 |
| Einspritzgeschwindigkeit: | 50 |
| Auswerfergeschwindigkeit vor / zurück: | 10/2 |
| Düsenanlagekraft: | 60 |
| Formschließkraft: | 500 kN |
| Einspritzzeit: | 2,5 s |
| Nachdruckzeit: | 0,0 s |
| Kühlzeit: | 16,0 s |
| Pausenzeit: | 7,5 s |
| Dosierverzögerungszeit: | 0,5 s |
| Verzögerungszeit Düse zurück: | 0,5 s |
| Düse zeitabhängig zurück: | 1,5 s |
| Dosieren: | 35,0 mm |
| Kompressionsentlastung: | 38,0 mm |
| Formtemperatur: | angußseitig: wassergekühlt (7 l/min) Kern: 60, 80 und 100 °C zur Zeit der Entformung |
| Spritzgewicht: | ca. 15,5 g |

In Tabelle 2 sind die Entformungsdrücke der Beispiele A und B wiedergegeben. Zur Veranschaulichung der Werte wurde unter gleichen Bedingungen eine Entformungshülse ohne Additiv-Zusatz als auch mit Zusatz einer Mischung aus 0,15 Gewichtsteilen N,N- Ethylenbisstearamid und 0,15 Gewichtsteilen Glycerintristearat (Vergleich 1) hergestellt.

**Tabelle 2**

| **Formtrennmittel für PBT/PC** | | | |
|---|---|---|---|
| Beispiel | Entformungsdruck in bar bei | | |
| | 60 °C | 80 °C | 100 °C |
| ohne | 52,5 | > 85 | > 85 |
| A | 23 | 11 | 16 |
| B | 54 | 26 | 34 |
| Vergleich 1 | > 85 | 40,5 | > 85 |

Aus Tabelle 2 ist zu erkennen, daß eine Mischung aus Glycerintristearat und Ethylenbisstearamid auf jeden Fall eine deutlich schlechtere Trennwirkung zeigt als 2-Stearylamidoethylstearat.

### Trennmittelprüfung an PA (Beispiel C, D)

Im Prinzip erfolgte die Trennmittelprüfung wie bereits beschrieben. Als Spritzgießparameter wurden gewählt:

| | |
|---|---|
| Zylinderausrüstung: | offene Düse, Schneckendurchmesser = 28 mm, |
| Zylindertemperaturen: | 250, 260, 265 °C |
| Düsentemperatur: | 270 °C |
| Schneckendrehzahl: | 45 (Stellung) |
| Einspritzdruck: | 18 (ca. 420 bar) |
| Nachdruck: | 9 (ca. 260 bar) |
| Schneckenstaudruck: | 1 |
| Auswerferdruck: | 45 |
| Einspritzgeschwindigkeit: | 16 |
| Auswerfergeschwindigkeit vor / zurück: | 10/2 |
| Einspritzzeit: | 2,5 s |
| Nachdruckzeit: | 2,0 s |
| Kühlzeit: | 15,0 s |
| Pausenzeit: | 6,0 s |
| Dosierverzögerungszeit: | 0,5 s |
| Verzögerungszeit Düse zurück: | 0,5 s |
| Düse zeitabhängig zurück: | 1,5 s |
| Dosieren: | 35,0 mm |
| Kompressionsentlastung: | 38,0 mm |
| Düsenanlagekraft: | 55 |
| Formschließkraft: | 500 kN |
| Formtemperatur: | angußseitig: wassergekühlt (8 l/min) Kern: 80, 100 und 120 °C zur Zeit der Entformung |
| Spritzgewicht: | ca. 14,6 g |

### Gleitmittelprüfung an PA (Beispiel C, D)

Die Ermittlung des Fließverhaltens erfolgte in der Mannesmann-Demag-Spritzgießmaschine D 120 NC und der Spiralform. Die Länge der gespritzten Spiralen wurde als Maß für die Gleitmittelwirkung herangezogen. Als Spritzgießparameter wurden gewählt:

| | |
|---|---|
| Zylinderausrüstung: | offene Düse, Schneckendurchmesser = 45 mm, mit Rückströmsperre |
| Zylindertemperaturen: | 270, 270, 270 °C |
| Düsentemperatur: | 290 °C |
| Schneckendrehzahl: | 17 (Stellung) |
| Einspritzdruck: | 13 (ca. 310 bar) |
| Nachdruck: | 8 (ca. 160 bar) |
| Schneckenstaudruck: | 4 |
| Einspritzgeschwindigkeit: | 3 |
| Einspritzzeit: | 5,0 s |
| Nachdruckzeit: | 2,0 s |
| Kühlzeit: | 15,0 s |
| Pausenzeit: | 2,0 s |
| Dosierverzögerungszeit: | 0,5 s |
| Verzögerungszeit Düse zurück: | 2,0 s |
| Düse zeitabhängig zurück: | 0,5 s |
| Dosieren: | 34,0 mm |
| Kompressionsentlastung: | 38,0 mm |
| Düsenanlagekraft: | 15 |
| Formschließkraft: | 1000 kN |
| Werkzeug: | Spirale, 3 x 15 mm, rechtwinklig umgelenkt, Stangenanguß |
| Formtemperatur: | 80 °C |
| Spritzgewicht: | 27,0 bis 33,5 g |

In Tabelle 3 sind die Entformungsdrücke und die Spirallängen zusammengefaßt; Standard: ohne Additiv; als Vergleich 2 wurde PA mit N,N-Ethylenbisstearamid unter gleichen Bedingungen versetzt.

**Tabelle 3**

| **Formtrennmittel/Gleitmittel für PA** | | | | |
|---|---|---|---|---|
| Beispiel | Spirallänge (m) | Entformungsdruck in bar bei | | |
| | | 80 °C | 100 °C | 120 °C |
| ohne | 55 | > 65 | > 65 | > 65 |
| C | 65,5 | 11 | 9 | 7 |
| D | 59 | 18 | 13,5 | 9,5 |
| Vergleich 2 | 56 | 28 | 24,5 | 13 |

Für Polyamide sind die erfindungsgemäßen Aminoalkanolamidester hervorragend geeignet; so zeichnen sie insbesondere die niedrigen Entformungsdrücke bei hohen Temperaturen aus.

### Trennmittelprüfung an PBT (Beispiel E und F)

Im Prinzip erfolgte die Trennmittelprüfung wie bereits beschrieben. Als Spritzgießparameter wurden gewählt:

| | |
|---|---|
| Zylinderausrüstung: | offene Düse, Schneckendurchmesser = 28 mm, |
| Zylindertemperaturen: | 230, 240, 250 °C |
| Düsentemperatur: | 260 °C |
| Schneckendrehzahl: | 40 (Stellung) |
| Einspritzdruck: | 8 (ca. 200 bar) |
| Nachdruck: | - |
| Schneckenstaudruck: | 5 |
| Auswerferdruck: | 50 |
| Einspritzgeschwindigkeit: | 40 |
| Auswerfergeschwindigkeit vor / zurück: | 10/2 |
| Düsenanlagekraft: | 60 |
| Formschließkraft: | 500 kN |
| Einspritzzeit: | 2,0 s |
| Nachdruckzeit: | - |
| Kühlzeit: | 20,0 s |
| Pausenzeit: | 8,0 s |
| Dosierverzögerungszeit: | 0,5 s |
| Verzögerungszeit Düse zurück: | 0,5 s |
| Düse zeitabhängig zurück: | 1,5 s |
| Dosieren: | 35,0 mm |
| Kompressionsentlastung: | 38,0 mm |
| Formtemperatur: | angußseitig: wassergekühlt (7 l/min) Kern: 80, 100 und 120 °C zur Zeit der Entformung |
| Spritzgewicht: | ca. 17,8 g |

In Tabelle 4 sind die Entformungsdrücke zusammengefaßt

**Tabelle 4**

| **Formtrennmittel für PBT** | | | |
|---|---|---|---|
| Beispiel | Entformungsdruck (bar) bei | | |
| | 80 °C | 100 °C | 120 °C |
| ohne | > 75 | > 75 | > 70 |
| E | 58,5 | 41 | 23,5 |
| F | 59,5 | 43 | 26 |

### Gleitmittelprüfung an PP (Beispiel G, H)

Die Ermittlung des Fließverhaltens erfolgte wie bereits beschrieben. Als Spritzgießparameter wurden gewählt:

### Spritzgießparamter

| | |
|---|---|
| Zylinderausrüstung: | offene Düse, Schneckendurchmesser = 45 mm, mit Rückströmsperre |
| Zylindertemperaturen: | 210, 220, 220 °C |
| Düsentemperatur: | 230 °C |
| Schneckendrehzahl: | 17 (Stellung) |
| Einspritzdruck: | 16 (ca. 400 bar) |
| Nachdruck: | 5 |
| Schneckenstaudruck: | 4 |
| Einspritzgeschwindigkeit: | 9 |
| Düsenanlagekraft: | 9 |
| Einspritzzeit: | 4,0 s |
| Nachdruckzeit: | 1,5 s |
| Kühlzeit: | 15,0 s |
| Pausenzeit: | 3,0 s |
| Dosierverzögerungszeit: | 0,5 s |
| Verzögerungszeit Düse zurück: | 2,0 s |
| Düse zeitabhängig zurück: | 0,5 s |
| Dosieren: | 41,0 mm |
| Kompressionsentlastung: | 43,0 mm |
| Formschließkraft: | 1000 kN |
| Werkzeug: | Spirale, 3 x 15 mm, rechtwinklig umgelenkt, Stangenanguß |
| Formtemperatur: | 60 °C |
| Spritzgewicht: | 18 bis 20,5 g |

In Tabelle 5 sind die Spirallängen zusammengefaßt.

Als Vergleich 3 wurden unter gleichen Bedingungen eine Mischung von 0,75 Gewichtsteilen N,N-Ethylenbisstearamid und 0,75 Gewichtsteilen Calciumstearat in PP getestet.

**Tabelle 5**

| **Gleitmittel für PP** | |
|---|---|
| Beispiel | Spirallänge (cm) |
| ohne | 49 |
| G | 53 |
| H | 53 |
| Vergleich 3 | 51,5 |

### Gleitmittelprüfung an PP* (Beispiel I)

Die Gleitmittelprüfung erfolgte fast analog der für PP. Unterschiede bei den Spritzgießparametern waren lediglich:

| | |
|---|---|
| Einspritzdurck: | 19 (ca. 700 bar) |
| Dosieren: | 38,0 mm |
| Kompressionsentlastung: | 41,0 mm |
| Spritzgewicht: | 18,7 bis 20,6 g |

In Tabelle 6 sind die Spritzlängen zusammengefaßt: Als Vergleich 4 wurde Stearinsäureamid unter gleichen Bedingungen getestet.

**Tabelle 6**

| **Gleitmittel für PP*** | |
|---|---|
| Beispiel | Spirallänge (cm) |
| ohne | 51 |
| I | 55 |
| Vergleich 4 | 54 |

Gegenüber dem handelsüblichen Stearinsäureamid zeigt sich eine verbesserte Wirkung der erfindungsgemäßen Produkte und zudem eine geringere Neigung zu Nebenreaktionen wie Farbveränderung.

### Gleitmittelprüfung an PE (Beispiel J)

Die Ermittlung des Fließverhaltens erfolgte wie beschrieben. Als Spritzgießparameter wurden gewählt:

| | |
|---|---|
| Zylinderausrüstung: | offene Düse, Schneckendurchmesser = 45 mm, mit Rückströmsperre |
| Zylindertemperaturen: | 190 bis 200 °C |
| Düsentemperatur: | 210 °C |
| Schneckendrehzahl: | 16 (Stellung) |
| Einspritzdruck: | 25 (ca. 700 bar) |
| Nachdruck: | 17 (ca. 500 bar) |
| Schneckenstaudruck: | 4 |
| Einspritzgeschwindigkeit: | 17 |
| Einspritzzeit: | 5,0 s |
| Nachdruckzeit: | 2,0 s |
| Kühlzeit: | 15,0 s |
| Pausenzeit: | 3,0 s |
| Dosierverzögerungszeit: | 0,5 s |
| Verzögerungszeit Düse zurück: | 2,0 s |
| Düse zeitabhängig zurück: | 0,5 s |
| Dosieren: | 43,0 mm |
| Kompressionsentlastung: | 45,0 mm |
| Düsenanlagekraft: | 15 |
| Formschließkraft: | 1000 kN |
| Werkzeug: | Spirale, 3 x 15 mm, rechtwinklig umgelenkt, Stangenanguß |
| Formtemperatur: | 50 °C |
| Spritzgewicht: | 21,2 bis 24,0 g |

In Tabelle 7 sind die Spirallängen wiedergegeben:

**Tabelle 7**

| **Gleitmittel für PE** | |
|---|---|
| Beispiel | Spirallänge (cm) |
| ohne | 55 |
| J | 58 |

## Patentansprüche

1. Verwendung von einem oder mehreren Aminoalkanolamidester(n) der allgemeinen Formel (I) 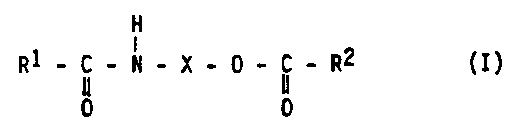 in der
R¹, R² gleich oder verschieden sein können und einen aliphatischen, gesättigten Alkylrest mit 1 bis 49 C-Atomen, wobei R¹ und R² zusammen mindestens 14 C-Atome haben, einen einfach oder mehrfach ungesättigten Alkylenrest mit 5 bis 21 C-Atomen, einen Phenylrest oder einen alkylierten Phenylrest mit 1 bis 22 C-Atomen in der Alkylgruppe bedeuten und
X einen aliphatischen, gesättigten, zweiwertigen Alkylrest mit 2 bis 50 C-Atomen bedeutet
als Verarbeitungshilfsmittel für thermoplastische Kunststoffe, ausgewählt aus Polyamiden, Polyestern, Polycarbonaten, Polystyrolen und Copolymeren von Styrol, Polyethylenen, Polypropylenen oder Mischungen hiervon.

2. Verwendung nach Anspruch 1, dadurch gekennzeichnet, daß in der allgemeinen Formel (I) R¹ und R² einen aliphatischen, gesättigten Alkylrest mit mindestens 5, vorzugsweise mit 11 bis 23 C-Atomen bedeuten, wobei R¹ und R² zusammen mindestens 14, vorzugsweise 16 C-Atome haben, oder einen einfach ungesättigten Alkylrest mit 5 bis 21 C-Atomen.

3. Verwendung nach einem der Ansprüche 1 oder 2, dadurch gekennzeichnet, daß in der allgemeinen Formel (I) R¹ und R² gleich sind und einen aliphatischen, gesättigten, unverzweigten Alkylrest mit 11 bis 23 C-Atomen bedeuten.

4. Verwendung nach einem oder mehreren der Ansprüche 1 bis 3, dadurch gekennzeichnet, daß in der allgemeinen Formel (I) X für einen unverzweigten Alkylrest mit 2 bis 8 C-Atomen steht.

5. Verwendung nach einem oder mehreren der Ansprüche 1 bis 4, dadurch gekennzeichnet, daß in der allgemeinen Formel (I) R¹ und R² einen aliphatischen, gesättigten, unverzweigten Alkylrest mit 11 bis 23 C-Atomen und X einen zweiwertigen, unverzweigten Alkylrest mit 2 bis 4 C-Atomen bedeuten.

6. Verwendung nach einem oder mehreren der Ansprüche 1 bis 5, dadurch gekennzeichnet, daß Aminoalkanolamidester der allgemeinen Formel (I) in Mengen von 0,01 bis 10 Gewichtsteilen auf 100 Gewichtsteile thermoplastischen Kunststoffes verwendet werden.

7. Verwendung nach einem oder mehreren der Ansprüche 1 bis 6, dadurch gekennzeichnet, daß die Aminoalkanolamidester der allgemeinen Formel (I) als Formtrennmittel und/oder Gleitmittel für thermoplastische Kunststoffe verwendet werden.

8. Formteile aus thermoplastischen Kunststoffen, ausgewählt aus Polyamiden, Polyestern, Polycarbonaten, Polystyrolen und Copolymeren von Styrol, Polyethylenen, Polypropylenen oder Mischungen hiervon, dadurch gekennzeichnet, daß sie Aminoalkanolamidester der allgemeinen Formel (I) enthalten.

## Claims

1. The use of one or more aminoalkanolamide ester(s) corresponding to general formula (I): 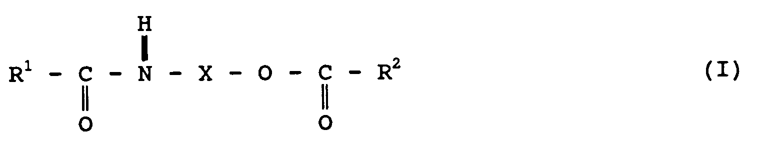 in which
R¹ and R² may be the same or different and represent an aliphatic, saturated alkyl radical containing 1 to 49 carbon atoms, R¹ and R² together containing at least 14 carbon atoms, a mono- or polyunsaturated alkylene radical containing 5 to 21 carbon atoms, a phenyl radical or an alkylated phenyl radical containing 1 to 22 carbon atoms in the alkyl group and
X is an aliphatic, saturated difunctional alkyl radical containing 2 to 50 carbon atoms,
as processing aids for thermoplastics selected from polyamides, polyesters, polycarbonates, polystyrenes and copolymers of styrene, polyethylenes, polypropylenes or mixtures thereof.

2. The use claimed in claim 1, characterized in that, in general formula (I), R¹ and R² represent an aliphatic, saturated alkyl radical containing at least 5 and preferably 11 to 23 carbon atoms, R¹ and R² together containing at least 14 and preferably 16 carbon atoms, or a monounsaturated alkyl radical containing 5 to 21 carbon atoms.

3. The use claimed in claim 1 or 2, characterized in that, in general formula (I), R¹ and R² are the same and represent an aliphatic, saturated unbranched alkyl radical containing 11 to 23 carbon atoms.

4. The use claimed in one or more of claims 1 to 3, characterized in that, in general formula (I), X is an unbranched alkyl radical containing 2 to 8 carbon atoms.

5. The use claimed in one or more of claims 1 to 4, characterized in that, in general formula (I), R¹ and R² represent an aliphatic, saturated unbranched alkyl radical containing 11 to 23 carbon atoms and X is a difunctional unbranched alkyl radical containing 2 to 4 carbon atoms.

6. The use claimed in one or more of claims 1 to 5, characterized in that aminoalkanolamide esters corresponding to general formula (I) are used in quantities of 0.01 to 10 parts by weight to 100 parts by weight of thermoplastic.

7. The use claimed in one or more of claims 1 to 6, characterized in that the aminoalkanolamide esters corresponding to general formula (I) are used as mould release agents and/or lubricants for thermoplastics.

8. Mouldings of thermoplastics selected from polyamides, polyesters, polycarbonates, polystyrenes and copolymers of styrene, polyethylenes, polypropylenes or mixtures thereof, characterized in that they contain aminoalkanolamide esters corresponding to general formula (I).

## Revendications

1. Utilisation d'un ou plusieurs aminoalcanolamide-ester(s) de formule générale (I) 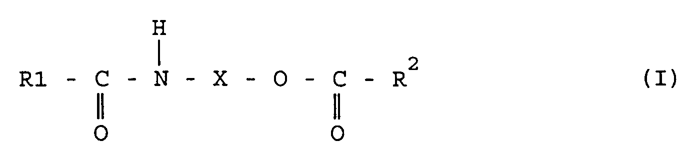 dans laquelle R¹ et R² peuvent être identiques ou différents et signifient un radical alcoyle aliphatique saturé, ayant de 1 à 49 atomes de carbone, dans laquelle R¹ et R² ont ensemble au moins 14 atomes de carbone, un radical alcoylène une fois ou plusieurs fois insaturé ayant de 5 à 21 atomes de carbone, un radical phényle ou un radical phényle alcoylé ayant de 1 à 22 atomes de carbone dans le groupe alcoyle et X signifie un radical alcoyle aliphatique saturé, bivalent ayant de 2 à 50 atomes de carbone,
en tant qu'adjuvants de façonnage pour des matières thermoplastiques choisies parmi les polyamides, les polyesters, les polycarbonates, les polystyrènes et les copolymères du styrène, les polyéthylènes, les polypropylènes, et les mélanges de ceux-ci.

2. Utilisation selon la revendication 1, caractérisée en ce que dans la formule générale (I), R¹ et R² signifient un radical alcoyle aliphatique saturé, ayant au moins 5, de préférence 11 à 23 atomes de carbone, dans laquelle R¹ et R² ensemble ont au moins 14 atomes de carbone, de préférence 16 atomes de carbone, ou bien un radical alcoyle une fois non saturé ayant de 5 à 21 atomes de carbone.

3. Utilisation selon une des revendications 1 ou 2, caractérisée en ce que dans la formule générale (I) R¹ et R² sont identiques et signifient un radical alcoyle aliphatique saturé, non ramifié, ayant de 11 à 23 atomes de carbone.

4. Utilisation selon une ou plusieurs des revendications 1 à 3, caractérisée en ce que dans la formule générale (I) X représente un radical alcoyle non ramifié ayant de 2 à 8 atomes de carbone.

5. Utilisation selon une ou plusieurs des revendications 1 à 4, caractérisée en ce que dans la formule générale (I) R¹ et R² signifient un radical alcoyle aliphatique, saturé, non ramifié ayant de 11 à 23 atomes de carbone et X un radical alcoyle bivalent, non ramifié ayant de 2 à 4 atomes de carbone.

6. Utilisation selon une ou plusieurs des revendications 1 à 5, caractérisée en ce que les aminoalcanolamide-esters de formule générale (I) sont utilisés en quantités allant de 0,01 à 10 parties en poids pour 100 parties en poids de matière thermoplastique.

7. Utilisation selon une ou plusieurs des revendications 1 à 6, caractérisée en ce que les aminoalcanolamide-esters de formule générale (I) sont utilisés comme agents de démoulage et/ou agents de glissement pour des matières thermoplastiques.

8. Pièces moulées en matières thermoplastiques choisies parmi les polyamides, les polyesters, les polycarbonates, les polystyrènes et les copolymères du styrène, les polyéthylènes, les polypropylènes, ou les mélanges de ceux-ci, caractérisées en ce qu'elles renferment des aminoalcanolamide-esters de formule générale (I).
